(19) Europäisches Patentamt

European Patent Office

Office européen des brevets

(11) Veröffentlichungsnummer: **0 228 476**
**A1**

(12) **EUROPÄISCHE PATENTANMELDUNG**

(21) Anmeldenummer: **85116538.1**

(22) Anmeldetag: **30.12.85**

(51) Int. Cl.⁴: **G05D 16/16** , **F16K 1/12**

(43) Veröffentlichungstag der Anmeldung:
**15.07.87 Patentblatt 87/29**

(84) Benannte Vertragsstaaten:
**AT BE CH DE FR GB IT LI LU NL SE**

(71) Anmelder: **Johannes Erhard, H. Waldenmaier Erben Süddeutsche Armaturenfabrik GmbH & Co.**
**Postfach 1280**
**D-7920 Heidenheim(DE)**

(72) Erfinder: **Hochstatter, Josef, Dr.**
**Buchberg 5**
**D-7086 Neresheim-Ohmenheim(DE)**

(74) Vertreter: **Seeger, Wolfgang, Dipl.-Phys.**
**European Patent Attorney Bereiteranger 15**
**D-8000 München 90(DE)**

(54) **Druckminderventil.**

(57) Druckminderventil für Flüssigkeiten und Gase, mit einer Hilfssteuerung und einem Absperrkörper, der zwischen einer vollständig öffnenden Durchflußstellung und einer vollständig schließenden Absperrstellung bewegbar ist, dadurch gekennzeichnet, daß der Asperrkörper ein im wesentlichen parallel zur Strömungsrichtung bewegbar angeordneter Ringkolben ist, der zweckmäßigerweise in einem Kolbengehäuse in Längsrichtung desselben bewegbar angeordnet ist.

**EP 0 228 476 A1**

## Druckminderventil

Die Erfindung betrifft ein Druckminderventil mit durch das Eigenmedium gesteuertem Absperrkörper der Absperr/Freigabe-Einrichtung.

Solche Druckminderventile sind Regelorgane; ihre Aufgabe ist es, einen schwankenden Hochdruck, ohne Fremdenergie in einen konstanten Niederdruck zu wandeln. Druckminderventile werden insbesondere in Wasserversorgungsleitungen eingesetzt, um auf der Entnahmeseite, unabhängig vom Hochdruck und unabhängig vom Durchfluß, einen konstanten Wasserdruck aufrechtzuerhalten. Zu diesem Zweck ist eine mit dem eigenen Medium arbeitende Steuereinrichtung vorgesehen, welche dann, wenn aufgrund der Entnahme von Wasser auf der Entnahmeseite der Druck abfällt, den Absperrkörper aus seiner Schließstellung, in der er tropffest dichtend an dem Sitz der Absperr/Freigabe-Einrichtung sitzt, in Öffnungsrichtung verschiebt, damit von der Versorgungsseite aus Wasser zu der Entnahmeseite nachlaufen kann, bis dort wieder der gewünschte Druck herrscht.

Druckminderventile der eingangs genannten Art sind z.B. aus dem deutschen Gebrauchsmuster 1 690 358, angemeldet am 30. Dezember 1954, der deutschen Patentschrift 1 093 639, der deutschen Patentschrift 1 121 895 und aus der deutschen Patentschrift 852 324 vom 13. Oktober 1952 sowie aus "KAT 017 103-B", Blatt: 1, 1. Ausgabe/1st edition: 4.3.1983 bekannt.

Alle diese bekannten Druckminderventile arbeiten mit einem Absperrkörper, der vertikal zu der Hauptströmungsrichtung bewegbar ist und je nach seiner Stellung einen mehr oder weniger großen Durchflußquerschnitt freigibt und in seiner Schließstellung mit seinem sogenannten Teller den Druchflußquerschnitt vollständig abschließt.

Diese bekannten Druckminderventile weisen durchweg den Nachteil auf, daß bei ihnen große Querkräfte auf den Absperrkörper einwirken, wodurch sich die Reibung erhöht, mit der Folge, daß Riefen an den Gleitflächen entstehen und daß es zum Klemmen des Ventils führen kann.

Ferner weisen diese Ventilarten den Nachteil auf, daß bei größeren Druckdifferenzen Kavitation entstehen kann und es infolgedessen zu Kavitationsschäden kommt, wodurch das Ventil undicht werden kann. Auch treten bei diesen Ventilarten große Druckschwankungen auf, insbesondere bei Kavitation.

Diese genannten Nachteile der bekannten Druckminderventile sind seit langer Zeit bekannt und auch druckschriftlich veröffentlicht, zum Beispiel seit dem "3rd International Fluid Power Symposium", 9th -11th May 1973, Paper C3, das bei der Unione Industriale, Turin, Italien abgehalten und von der BHRA Fluid Engineering, Cranfield, Bedford, England in Zusammenarbeit mit dem Politecnico di Torino gesponsert und organisiert wurde. In diesem genannten "Paper C3" heißt es zum Beispiel in der Zusammenfassung, auf der Seite C3-56, die Hauptursache der Instabilität bei den Tellerventilen war die Kavitation, die an dem Ventilteller auftrat. Nur bei einem der untersuchten Ventile sei eine Kavitation zwar nicht offensichtlich gewesen, sie könnte jedoch in einem kleineren Ausmaß auch bei diesem Ventil vorhanden gewesen sein. Als Lösung zu diesem weltweit bekannten Problem hatte die damalige Fachwelt es als zwingend notwendig erkannt, stromabwärts von dem Ventil ein kapazitives Element einzuführen.

Aufgabe der Erfindung ist es, ausgehend von dem genannten Stand der Technik ein Druckminderventil zu schaffen, welches die Nachteile der bekannten Druckminderventile vermeidet und insbesondere reibungsarm arbeitet und, wenn überhaupt, dann nur minimale Kavitationserscheinungen aufweist.

Diese Aufgabe ist durch die Merkmale des Anspruchs 1 gelöst.

Die Erfindung weist eine Vielzahl von Vorteilen auf:

Da das Ringkolbengehäuse in Strömungrichtung angeordnet ist und der Ringkolben selber parallel zur Strömungsrichtung zwischen Schließ-oder Sperrstellung einerseits und maximaler Öffnungsstellung andererseits verfahrbar ist, werden keine Querkräfte auf den Ringkolben ausgeübt.

Daraus ergibt sich zum einen der Vorteil, daß dieses erfindungsgemäße Ventil besonders reibungsarm arbeitet und deshalb besonders vorteilhaft dort einsetzbar ist, wo nur geringe Regelkräfte zur Verfügung stehen, bzw. wo die Druckdifferenz zwischen Hoch-und Niederdruck gering ist.

Ferner ergibt sich daraus der Vorteil, daß dieses Ventil überhaupt nur minimal mechanisch belastet wird und deshalb sehr langlebig ist und besonders störungsfrei arbeitet.

Hinzu kommt der daraus resultierende Vorteil, daß das Ventil besonders kostengünstig herstellbar ist, da es keinen sonst erforderlichen zusätzlichen Aufwand zum Auffangen der sonst vorhandenen Querkräfte erfordert.

Von großer Bedeutung ist auch, daß dieses Ventil, weil der Kolben in Strömungsrichtung angeordnet ist, mit sehr geringer Bauhöhe ausgebildet werden kann und deshalb auch keine größeren Einbauschächte erfordert.

Ein weiterer wesentlicher Vorteil der Erfindung ist darin zu sehen, daß sie ein besonders weiches Öffnen und Schließen des Absperrkörpers ermöglicht. Dieser Vorteil ergibt sich daraus, daß alle Stellen des Sitzes an der Innenseite des Ventils und der entsprechenden Dichtung des Ringkolbens identischen Drücken bzw. Strömungsverhältnissen ausgesetzt sind, da der Ventilsitz und der Ringkolben rotationssymmetrisch zur Achse des Strömungspfades angeordnet werden können.

Das erfindungsgemäße Ventil arbeitet somit mit besonders geringen Druckschwankungen, was wiederum eine Verringerung der mechanischen Belastung dieses Ventils zur Folge hat.

Die vorliegende Erfindung weist auch den weiteren Vorteil auf, daß sie Kavitationsschäden weitestgehend verhindert. Damit werden gleichzeitig auch die sonst als Folgeerscheinung der Kavitation auftretenden Druckschwankungen vermieden.

Ein weiterer wesentlicher Vorteil der vorliegenden Erfindung liegt darin, daß sie den Einsatz des Ventils sowohl mit dem Ringkolben stromaufwärts als auch mit dem Ringkolben stromabwärts angeordnet ermöglicht. Der Benutzer hat somit die Wahl, den Einbau bzw. den Einsatz in optimaler Weise auf den Verwendungszweck abgestimmt, vorzunehmen.

Zu erwähnen ist ferner der Vorteil, daß dieses Ventil besonders geräuscharm arbeitet, kaum Vibrationen aufweist und deshalb auch nur geringe Verschleißerscheinungen zeigt. Dieser Vorteil ist deshalb zu erwähnen, weil Druckminderventile im allgemeinen viel häufiger betätigt werden als andere Ventile, die nur öffnen und schließen.

Ein solches Ventil kann durch einfache Anordnung verschiedener Steuereinrichtungen und Dämpfungen für viele verschiedene Zwecke verwendet oder eingesetzt werden, zum Beispiel als

vorgesteuertes Schwimmerventil
vorgesteuerter Rückflußverhinderer
vorgesteuertes Überströmventil
vorgesteuerter Durchflußregler
vorgesteuertes Altitude-Ventil (Niveauregler)
vorgesteuertes 2/2-Wegeventil
vorgesteuertes Druckminderventil mit Durchflußbegrenzung

Ganz allgemein eignet sich dieses Ventil besonders vorteilhaft für alle Einsätze, bei denen eine häufige und/oder stetige, stoßarme und/oder geräuscharme Änderung des Durchflußquerschnitts erwünscht ist, und auch für solche Einsätze, bei denen nur relativ geringe Steuerkräfte zur Verfügung stehen.

Schließlich ist auch noch der Vorteil zu nennen, daß der Sitz im Gehäuseteil leicht auswechselbar und dadurch eine große Servicefreundlichkeit des Ventils gegeben ist.

Nach einer Weiterbildung der Erfindung ist der Ringkolben in einem Kolbengehäuse in Längsrichtung desselben bewegbar angeordnet. Das Kolbengehäuse kann länglich und besonders strömungünstig ausgebildet sein. Dadurch verringert sich der Strömungswiderstand. Somit wird die Regelfähigkeit des Ventils erhöht. Es eignet sich insbesondere für Einsatzfälle, wo nur eine geringe Druckdifferenz zur Verfügung steht. Gleichzeitig werden dadurch Beanspruchung und Verschleiß des Ventils herabgesetzt, was sehr erwünscht ist.

Das Kolbengehäuse ist hermetisch abgeschlossen und wird über eine Vorrichtung mit Druck beaufschlagt. Dadurch wird das Kräftegleichgewicht am Kolben beeinflußt, so daß sich der Kolben in Öffnungs-/-Schließrichtung bewegen läßt.

Nach einer anderen Weiterbildung der Erfindung ist der Ringkolben mittels einer Schubstange in Schließ-und in Öffnungsrichtung bewegbar angeordnet. Diese Schubstange kann in eine Endstellung hin vorgespannt sein.

Diese Weiterbildung der Erfindung weist den Vorteil auf, daß bei drucklosem Zustand das Ventil in eine definierte Stellung übergeht. In vielen Fällen wird der Ringkolben in seine Schließstellung hin vorgespannt sein.

Gemäß der Erfindung ist der Ringkolben mittels eines Gewichtes, das auf einen Schwenkhebel wirkt, dessen freies Ende mit der Schubstange gelenkig verbunden ist, in Richtung seiner Schließstellung hin vorgespannt. Es ist weiterhin denkbar, anstelle des Gewichtes eine Feder vorzusehen.

Dieser Kurbelantrieb bewirkt ein günstiges Moment und dem Vordruck angepaßte Kräfte.

Eine Weiterbildung der Erfindung sieht statt Kolbenstange, Schubkurbel und Gewicht eine Zug- oder Druckfeder vor.

Nach einer anderen Weiterbildung der Erfindung ist der Ringkolben innerhalb mehrerer Führungsleisten, die an dem Kolbengehäuse befestigt sind, geführt. Diese Weiterbildung bewirkt eine weitere Herabsetzung der Reibungskräfte.

Im Rahmen der vorliegenden Erfindung ist auch vorgesehen, daß der Ringkolben stirnseitig einen kurzen Regelaufsatz trägt. Dieser Regelaufsatz kann entsprechend seiner Formgebung bewirken, daß bei anfänglicher Bewegung des Ringkolbens aus seiner Schließstellung in die öffnende Richtung hin zunächst ein kleinerer Durchflußquerschnitt als sonst üblich freigegeben wird, wodurch ein besonders weiches Öffnen des Ventils ermöglicht wird. Bei Bewegung des Ringkolbens in seine vollständing absperrende Stellung wirkt diser Regelaufsatz in umgekehrtem Sinne, so daß diese Weiterbildung der Erfindung auch ein besonders weiches und stoßfreies Schließen des Ventils ermöglicht.

Die Entlüftung bzw. der Druckausgleich des Kolbenraums erfolgt zweckmäßigerweise über die zur Vorsteuereinrichtung gehörende Strahldüse. Diese Weiterbildung weist den Vorteil auf, daß ein einfacher konstruktiver Aufbau ermöglicht wird.

Weitere Vorteile und Merkmale der Erfindung gehen aus den Ansprüchen in Verbindung mit der Beschreibung und der Zeichnung hervor. In letzterer zeigen:

Fig. 1 einen Längsschnitt durch ein erfindungsgemäßes Druckminderventil mit einem Ringkolben, der gegen die Anströmungsrichtung hin angeordnet ist,

Fig. 2 eine Draufsicht auf das Druckminderventil der Figur 1.

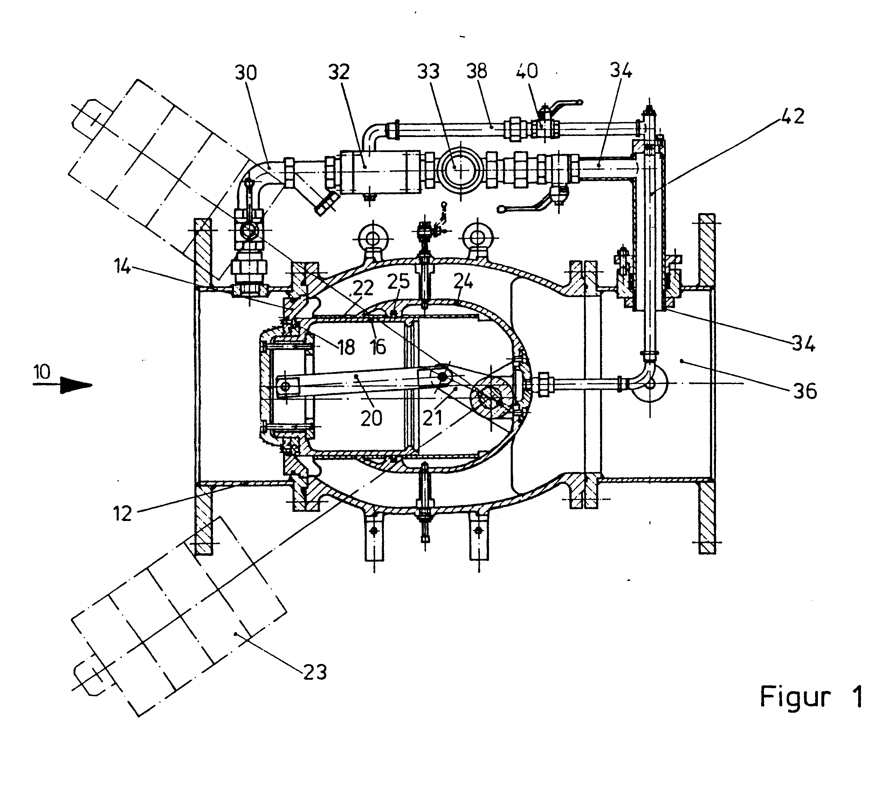

Die Figur 1 zeigt ein Druckminderventil gemäß der vorliegenden Erfindung. Das Strömungsmedium soll, wie der Pfeil 10 es andeutet, von der linken Seite zur rechten Seite strömen. Der eingangsseitige Abschnitt dieses Druckminderventils ist von einer Seitenwand 12 umgeben, die in Durchflußrichtung begrenzt ist durch einen Sitzring 14, gegen den von der stromabwärtigen Seite ein Ringkolben 16 anliegt, der mit einer Weichdichtung 18 abgedichtet ist. Der Ringkolben 16 kann mittels einer Schubstange 20 und einer Schubkurbel 21 in Schließ-und in Öffnungsrichtung bewegt werden. Bei dieser Bewegung wird der Ringkolben innerhalb mehrerer Führungsleisten 22, die an dem Kolbengehäuse 24 an mehreren Stellen befestigt sind, geführt.

Von dem Eingangsabschnitt des Druckminderventils führt eine Nebenleitung 30 über eine Strahldüse 32, ein Vorsteuerventil 33 und ein Rohr 34 zu dem Abströmabschnitt 36 des Druckminderventils. Von der Strahldüse 32 aus führt eine weitere Leitung 38 über ein Drosselventil 40 und eine Rohrleitung 42 in den Innenraum des Kolbengehäuses 24. Diese Leitungen und Ventile 30 bis 42 dienen als Steuereinrichtung für das gesamte Druckminderventil. Wenn der Hinterdruck in dem Abströmungsabschnitt 36 des Druckminderventils unter einen vorbestimmten Sollwert abfällt, öffnet das Vorsteuerventil. Durch die Wirkung der durchflossenen Steuerdüse 32 fällt der Druck im Kolbenraum ab und der Kolben des Ringkolbenventils öffnet bis zum Gleichgewichtszustand. Aufgrund der Druckdifferenz zwischen Vordruck und Hinterdruck wird der Ringkolben 16 nach rechts in seine Öffnungsstellung verfahren, so daß das Strömungsmedium von der Vordruckseite nachströmen kann. Bei einer großen Abweichung des Hinterdrucks vom Sollwert fließt ein stärkerer Strömungsmittelstrom durch die Strahldüse 32, die, infolge der erhöhten Strömungsgeschwindigkeit über die Rohrleitung 42, das Drosselventil 40 und die Rohrleitung 38 innerhalb des Kolbengehäuses 24, welches durch eine Dichtung 25 gegenüber dem Innenraum des Druckminderventils abgedichtet ist, eine Druckabsenkung bewirkt, die den Ringkolben 16 nach rechts in die Öffnungsstellung verfährt. Wenn der Hinterdruck auf seinen gewünschten Sollwert angestiegen ist, wird, entsprechend der Voreinstellung, die Geschwindigkeit der Strömung durch die Strahldüse 32 so stark abnehmen, daß über die Leitung 38, das Drosselventil 40 und die Leitung 42 kein Strömungsmittel aus dem Innenraum des Ringkolbengehäuses 24 mehr entnommen wird. Infolgedessen wird der Ringkolben 16, der mit einem Gewicht 23 vorgespannt ist, über Kurbel 21 und die Schubstange 20 wieder in seinem Gleichgewichtszustand gehalten. Der Öffnungsgrad des Ventils ist an der Stellung des Fallgewichtes erkennbar.

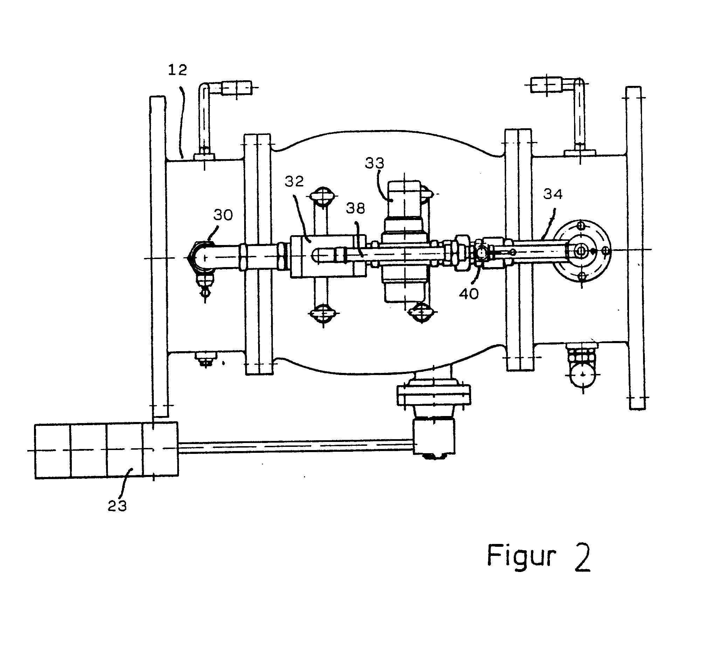

Die Figur 2 zeigt eine Draufsicht auf die Vorsteuereinrichtung und auf die Oberseite des Ventils der Figur 1. Da in dieser Figur für gleiche Teile die gleichen Bezugzeichen verwendet sind wie in Figur 1, ist die Figur 2 aus sich heraus, ohne weitere Erklärungen verständlich.

**Ansprüche**

1. Druckminderventil für Flüssigkeiten und Gase, mit einer Hilfssteuerung und einem Absperrkörper, der zwischen einer vollständig öffnenden Durchflußstellung und einer vollständig - schließenden Absperrstellung bewegbar ist, dadurch gekennzeichnet, daß der Absperrkörper ein im wesentlichen parallel zur Strömungsrichtung bewegbar angeordneter Ringkolben (16) ist.

2. Druckminderventil nach Anspruch 1, dadurch gekennzeichnet, daß der Ringkolben (16) in einem Kolbengehäuse (24) in Längsrichtung desselben bewegbar angeordnet ist.

3. Druckminderventil nach einem der vorhergehenden Ansprüche, dadurch gekennzeichnet, daß das Kolbengehäuse (24) hermetisch abgeschlossen ist und über die Vorrichtung (30, 32, 38, 40, 42) mit Druck beaufschlagt wird.

4. Druckminderventil nach einem der vorhergehenden Ansprüche, dadurch gekennzeichnet, daß das Kolbengehäuse (24) mit Hilfe einer Dichtung - (25) abgeschlossen wird.

5. Druckminderventil nach einem der vorhergehenden Ansprüche, dadurch gekennzeichnet, daß der Ringkolben (16) mittels einer Schubstange - (20) und Kurbel (21) in Schließ-und in Öffnungsrichtung bewegbar angeordnet ist.

6. Druckminderventil nach einem der vorhergehenden Ansprüche, dadurch gekennzeichnet, daß der Ringkolben (16) innerhalb mehrerer Führungsleisten (22), die an dem Kolbengehäuse - (24) befestigt sind, geführt ist.

7. Druckminderventil nach einem der vorhergehenden Ansprüche, dadurch gekennzeichnet, daß der Ringkolben (16) in Richtung einer seiner Endstellungen hin vorbelastet ist.

8. Druckminderventil nach einem der vorhergehenden Ansprüche, dadurch gekennzeichnet, daß der Ringkolben (16) durch ein Gewicht (23) in Schließstellung hin vorbelastet ist.

9. Druckminderventil nach einem der vorhergehenden Ansprüche, dadurch gekennzeichnet, daß der Ringkolben (16) durch ein an einem Schwenkhebel (21), dessen schwenkender Endabschnitt mit der Schubstange (20) gelenkig verbunden ist, wirkendes Gewicht vorbelastet ist.

10. Druckminderventil nach einem der vorhergehenden Ansprüche, dadurch gekennzeichnet, daß die Entlüftung bzw. der Druckausgleich des Kolbenraums über die zur Vorsteuereinrichtung gehörende Strahldüse (32) erfolgt.

Figur 1

Figur 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 865 128 (V. ZADOO) * Zusammenfassung; Spalte 2, Zeile 19 - Spalte 3, Zeile 54; Spalte 5, Zeilen 9-16; Abbildungen 1,7 * | 1-3,7 | G 05 D 16/16 F 16 K 1/12 |
| Y | | 4-6,8, 9 | |
| A | | 10 | |
| | --- | | |
| Y | DE-C- 445 422 (R. WOLF) * Seite 2, Zeilen 8-14; Abbildung * | 4 | |
| | --- | | |
| Y | GB-A- 283 676 (R. BLAKEBOROUGH) * Seite 2, Zeile 105- Seite 3, Zeile 37; Abbildung 1 * | 5,8,9 | RECHERCHIERTE SACHGEBIETE (Int. Cl.4) G 05 D F 16 K |
| | --- | | |
| Y | US-A-2 315 797 (P. KINZIE) * Seite 1, rechte Spalte, Zeilen 43-46; Abbildung 1 * | 6 | |
| | --- | | |
| Y | FR-A- 763 362 (S.A. DES HAUTS FOURNEAUX ET FONDERIES DE PONT A MOUSSON) * Seite 5, Zeilen 55-67; Abbildungen 1-3 * | 9 | |
| | --- -/- | | |

Der vorliegende Recherchenbericht wurde für alle Patentansprüche erstellt.

| Recherchenort DEN HAAG | Abschlußdatum der Recherche 04-09-1986 | Prüfer HELOT H.V. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-C-1 093 639 (BOPP & REUTHER) * Spalte 2, Zeile 30 - Spalte 3, Zeile 4; Abbildung * ----- | 10 | |

RECHERCHIERTE
SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 04-09-1986 | HELOT H.V. |